# EUROPEAN PATENT SPECIFICATION

(11) **EP 1 498 828 B1**
(45) Date of publication and mention of the grant of the patent: **29.09.2010**
(21) Application number: 03016199.6
(22) Date of filing: 17.07.2003
(51) Int. Cl.: G06F 17/30

(54) **Method and computer system for storing multiple attribute values**
Verfahren und Computersystem zum Speichern von mehrfachen Attributwerten
Procédé et système informatique pour le stockage d'une multiplicité de valeurs d'attribut

(43) Date of publication of application: 19.01.2005
(73) Proprietor: SAP AG, 69190 Walldorf (DE)
(72) Inventor: Bergen, Axel, 69168 Wiesloch (DE); Sauermann, Volker, 69120 Heidelberg (DE); Schwarz, Arne, 69117 Heidelberg (DE)

(56) References cited:
- WO-A-02/061612
- US-A- 5 295 261
- US-A- 5 557 786
- DATE C J: "INTRODUCTION TO DATABASE SYSTEMS, POINTER CHAINS" INTRODUCTION TO DATABASE SYSTEMS, READING, ADDISON WESLEY, US, vol. 1, 1990, pages 82-86, XP002238012
- HAERDER T ET AL: "Datenbanksysteme, PASSAGE" DATENBANKSYSTEME: KONZEPTE UND TECHNIKEN DER IMPLEMENTIERUNG, XX, XX, 1999, page COMPLETE21 XP002238738

## Description

### Field of the Invention

The present invention generally relates to electronic data processing, and more particularly, relates to methods, computer program products and systems for data storage.

### Background of the Invention

The international patent application "Data Structure for Information Systems" PCT/EP02/01026 describes how to establish a data structure used by a data storage system to enable rapid query processing. The data structure is preferably stored in the main memory of the data storage system and can be used for selecting and counting data with respect to specific search criteria based on attribute values. The underlying assumption in the above patent application is that for each record of the data storage system no more than a single value per attribute is stored.

In practice, there is a need to store multiple values for an attribute in a record. In a relational database table multiple values of an attribute can be stored, for example, by having a column for each attribute and having multiple rows per record for the attribute, where the maximum number of attribute values corresponds to the number of rows per record. For example, if a person has three hobbies, each hobby is stored in a corresponding row of the attribute column "hobby".

Alternatively, in a relational database table, the record can have only a single row and a specific column for each attribute value of the data can be stored in two tables that are linked accordingly.

The data storage system of the above patent application uses superposed tree structures instead of tables for storing records and attribute values. There is a need to adapt the data storage system according to the capabilities of relational database systems.

### Summary of the Invention

A goal of the invention is to provide a method, computer system and computer program product for fast data retrieval with respect to data records having multiple value attributes.

This goal is met by embodiments of the invention according to the claims 1, 6 and 12 by superposing a multi value structure to two tree structures, where the first tree structure stores attribute values and the second tree structure stores which attributes belong to a specific data record.

By introducing a multiple value counter for each node of the multiple value structure, the embodiments can promptly answer queries with respect to multiple value attributes.

The aspects of the invention will be realized and attained by means of the elements and combinations particularly pointed out in the appended claims. It is to be understood that both the foregoing general description and the following detailed description are exemplary and explanatory only and are not restrictive of the invention as described.

### Brief Description of the Drawings

- FIG. 1: is a simplified block diagram of an example of a data storage computer system that can be operated according to invention;
- FIG. 2: is a diagram of a static hierarchical data structure used in one embodiment of the data storage system;
- FIG. 3: schematically shows the initial state of an anchor as used in the data structure;
- FIG. 4: illustrates the use of the anchor for the implementation of an InfoType;
- FIG. 5: illustrates adding an InfoCell to the data structure;
- FIG. 6: illustrates the structure that is obtained when multiple InfoTypes are put into the data structure;
- FIG. 7: shows an InfoCourse that contains data;
- FIG. 8: illustrates multiple InfoCourse paths in the data structure;
- FIG. 9: shows the insertion of multiple values for an InfoType into the data structure with respect to one InfoCourse;
- FIG. 10: shows two multiple value ring structures belonging to corresponding InfoCourses; and
- FIG. 11: illustrates an InfoCourse having a multiple value InfoType.

### Detailed Description of the Invention

In the following, a database management software of a data (storage) system is explained that can be used together with an embodiment of the invention. The data storage system can store data from a relational database. However, the data structure used by the data storage system is not limited to the constraints of a known relational database architecture. Examples of data structure elements of the data storage system are InfoSystem, InfoArea, InfoCluster, InfoType InfoCourse, and InfoCell. In a relational database the structure elements correspond to elements, such as Management System, Database, Table, Attribute, Data Record, and Field, respectively. For convenience of explanation the correspondence of terms is repeated in the following table 1.

**table 1: correspondence of terms**

| **data storage system** | **relational database system** |
|---|---|
| InfoSystem | Management System |
| InfoArea | Database |
| InfoCluster | Table |
| InfoType | Attribute |
| InfoCourse | Data record |
| InfoCell | Field |

Further definitions of terms, as used hereinafter:
Boolean operators:
operators used in Boolean statements, e.g., AND, OR.
Boolean expression:
statement including multiple conditions that are combined using Boolean operators.

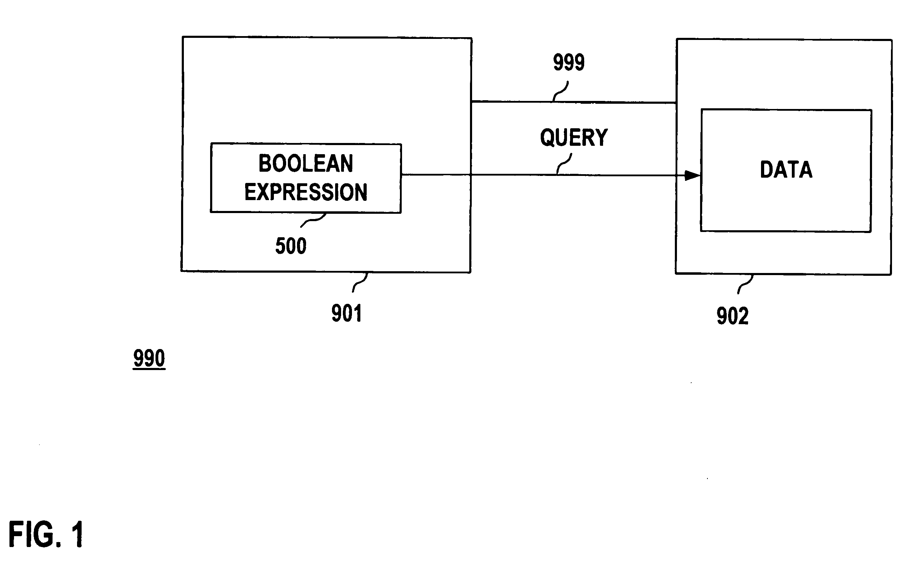

FIG. 1 is a simplified block diagram of the computer system 990 that can be used with an embodiment of the invention. The computer system 990 includes multiple computing devices (e.g., first computing device 901 and second computing device 902) that communicate over a network 999, such as a local area network (LAN), wide area network (WAN), the Internet, or a wireless network.

For example, the second computing device 902 may be a backend system, such as a database system, a file system or an application system, that stores data. The data can also be stored anywhere inside or outside of the computer system 990.

The first computing device 901 may be used to compose Boolean expressions 500 to be used in a QUERY for retrieving selected data from the second computing device 902. For example, the first computing device 901 may be a front end computer that provides a graphical user interface (GUI) to a user.

There can be various ways in which the data storage system 902 receives the QUERY, dependent on the interfaces offered for the data storage system 902. For example, in case of using an SAP R/3 based system, the SAP Remote Function Call (RFC) functionality provided by the ABAP kernel can be used. An application programming interface (API) can be implemented as a collection of ABAP Function Modules. The API uses the RFC functionality to communicate remotely with the data storage system. An SAP R/3 based application uses the API for receiving parameters that are passed to the data storage system 902. The corresponding results are then returned as ABAP parameters. A selection query is filled into an internal table in ABAP and can be rapidly processed by the data storage system since the query is already pre-structured.

In general, any interface or meta format can be used to post a Query to the data storage system. A pre-structured query is useful but not necessary. The query may also be coded in XML or simply be passed to the data storage system as a string that has to be parsed within the data storage system.

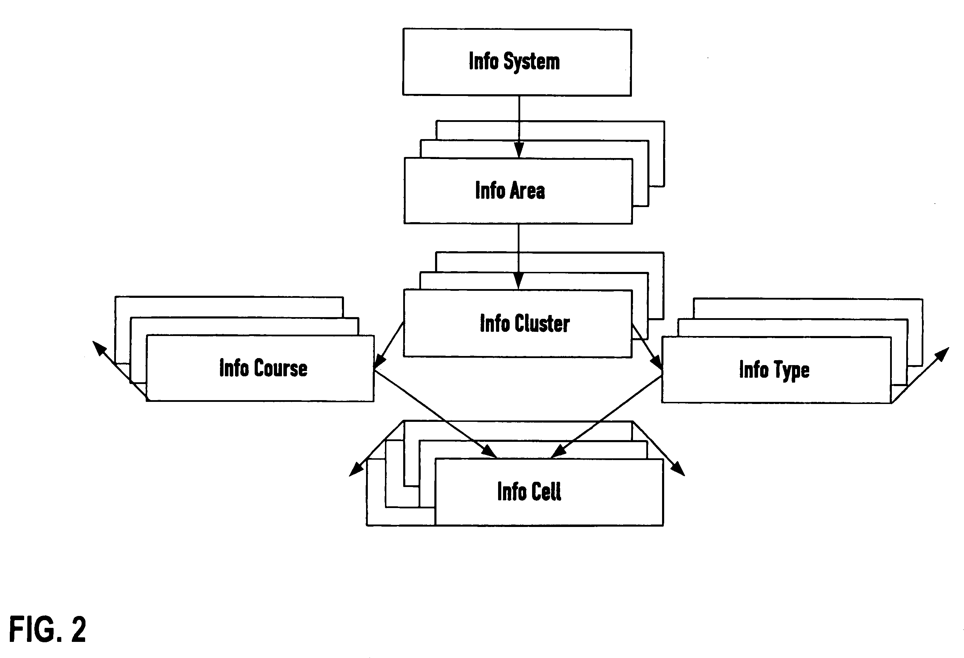

FIGs. 2 to 8 explain details of one embodiment of the data storage system 902. For example, as described in the patent application PCT/EP02/01026, the data storage system 902 can be configured as a fast cache with all data structures residing in its main memory.

FIG. 2 is a diagram of a static hierarchy structure used in one embodiment of the data storage system 902. Each box in the structure corresponds to an instance of the data type that is used as a label for the box. Multiple overlapping boxes illustrate multiple instances of the same data type. A single arrow between instances of different data types stands for an arbitrary number of arrows between multiple instances at each corresponding level of the structure. In the following description, the data type labels are used to refer to corresponding instances of the data type. The highest level in the structure is the InfoSystem level. Down from the top level one or more InfoAreas are connected to the InfoSystem. The InfoSystem provides algorithms necessary to operate the data storage system in run time. The InfoSystem is connected to any number of InfoAreas through a linking element, which will be described hereinafter as an anchor. These InfoAreas can for example refer to logical units of the InfoSystem.

Each InfoArea is connected via a linking element (again an anchor as described hereinafter) to an InfoCluster. In turn, each InfoCluster is connected to at least one InfoCourse and at least one InfoType, through respective linking elements, such as anchors. The InfoType can be seen as an attribute of a table; an InfoCourse starts always in an InfoCluster. If an InfoCourse stays within an InfoCluster with its addressed InfoCell elements corresponding to fields of a table, then the InfoCourse is similar to a record of a table, such as a relational database table.

Under the InfoCourse and the InfoType the InfoCell is found; this is the element on the lowest level in the hierarchical structure. On the creation of an InfoType an anchor is created that is an InfoCell also. This anchor has the function to represent the structure of following InfoCell elements.

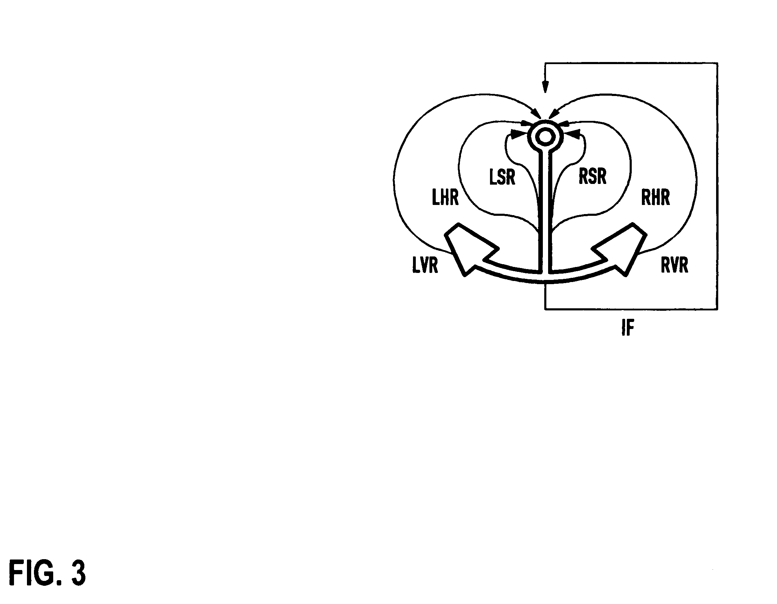

For the implementation of the levels below the InfoArea level, i.e. the InfoCluster, the InfoCourse, the InfoType, and the InfoCell levels, use is made of a data element according to the invention as shown in FIG. 3. In this example, the data element is shown schematically as an anchor, and is provided with a number of pointers. The pointers of the first pair are labelled LVR and RVR (Left Vertical Ring, respectively Right Vertical Ring), the pointers of the second pair are labelled LHR and RHR (Left Horizontal Ring, respectively Right Horizontal Ring), the pointers of the third pair are labelled LSR and RSR (Left Self Ring, respectively Right Self Ring), and the single pointer is labelled IF (Information bridge). Note that the pointers LSR, RSR and IF are in principle optional. This initial state is also the simplest of possible ring structures. Every pointer in the structure has a valid address, and cases of a non defined pointer (nil pointer) are avoided.

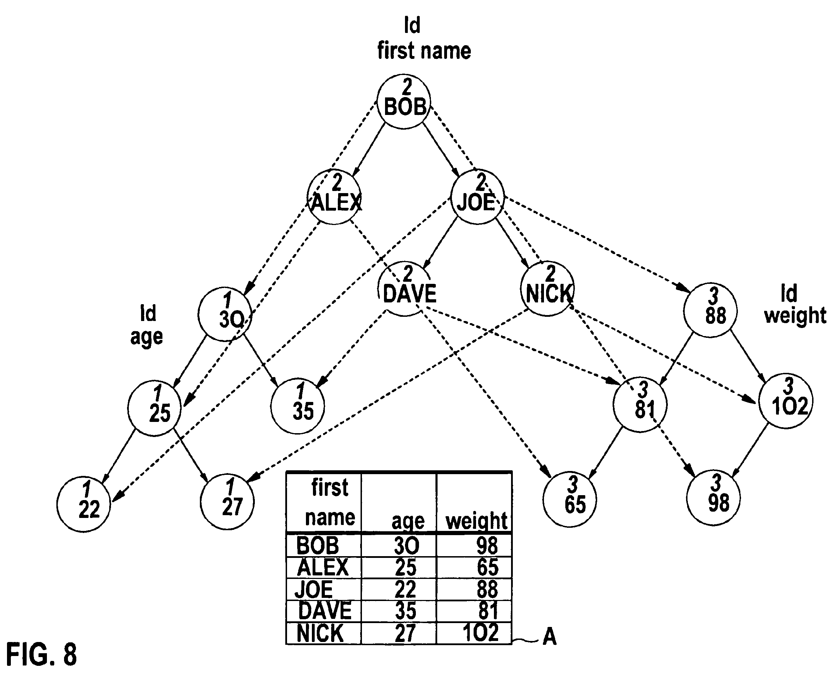

In the following, example data is used as shown in table A of FIG. 8. The table includes data regarding first names, ages and weights. For this table an InfoCluster is generated. Furthermore, three InfoTypes are generated to represent respectively first names, ages, and weights.

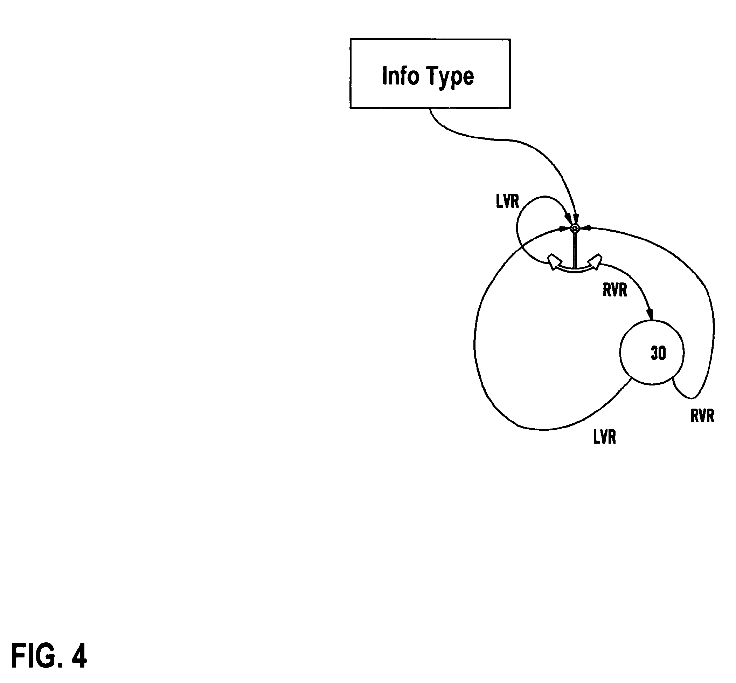

FIG. 4 illustrates the use of the data element for the implementation of the InfoType. In the InfoType, semantic information is included, such as, the data type (in this example "INTEGER"), field name (in this example "age")), etc. The InfoType has an anchor associated with the InfoType. The anchor points with its RVR pointer to the actual information carrier, that is the InfoCell. The InfoCell is as described above the lowest level entity within the data system. The InfoCell holds the information, as shown in FIG. 4; in this example "age is 30 in INTEGER".

As described above, the InfoCell is provided with a LVR/RVR pointer pair. As shown in FIG. 8, the RVR pointer of the InfoCell points towards the anchor, and also the LVR pointer points to the anchor. As a result, the ring configuration of the anchor is maintained.

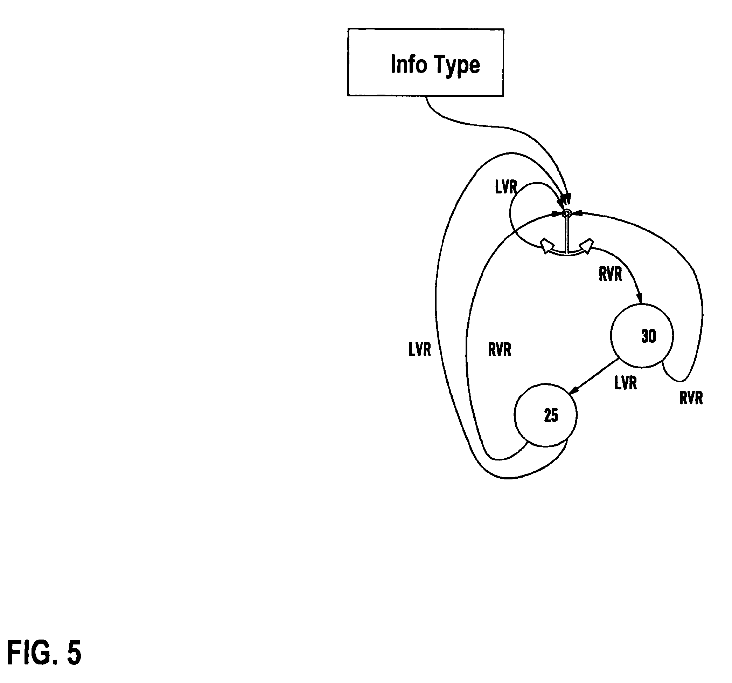

FIG. 5 illustrates how a further InfoCell is added to the data structure. The InfoCell (with the value "25") is inserted in the LVR ring after the first InfoCell. The LVR and RVR pointers of the InfoCell point to the anchor, as to maintain a closed ring.

The order in which the InfoCells are organized depends on their value. In case of a smaller value, the InfoCell is ordered in on the LVR side, otherwise on the RVR side. This practise is well known in the art as binary tree building. Preferably, the binary trees are organized as balanced or AVL trees, methods which are well known in the art. These kinds of trees minimise the number of levels within the tree structure, so as to minimize access time. Preferably, all tree structures within the data system are dynamically balanced in use, so as to guarantee optimum access times.

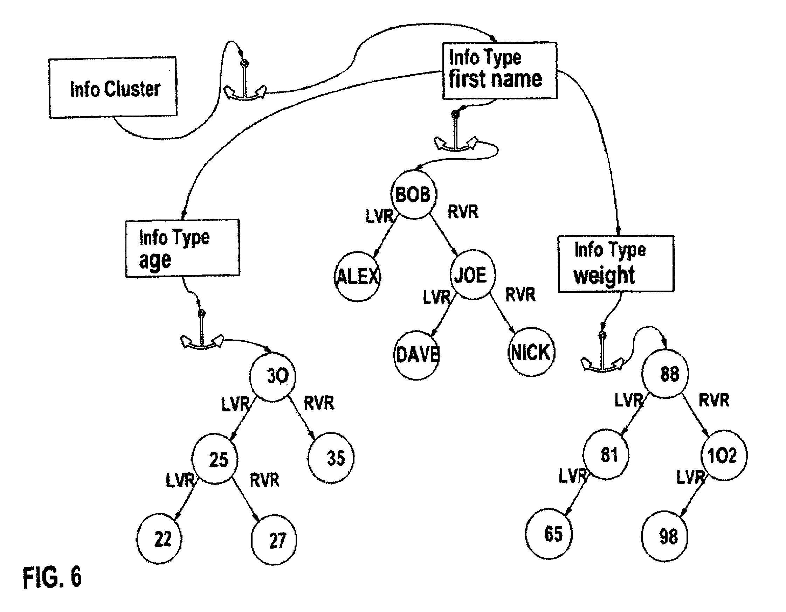

FIG. 6 illustrates the structure that is obtained when all InfoTypes of the table A are put into the data structure. In total, three InfoTypes are present; age, first name, and weight. Note that, for convenience of illustration, the end pointers of each last element in the respective trees are not shown. Under each anchor of the InfoType, the InfoCells are organised in a binary tree. The InfoCluster points to an anchor which in turn points to a first InfoType. The first InfoType in turn points to the other two InfoTypes. Each InfoType points to an anchor. The anchor has the additional function of a marker, that can be used by an access or query process as a break or return sign.

To complete the implementation of the table, the relations between the InfoType have to be made. To this end an InfoCourse is introduced.

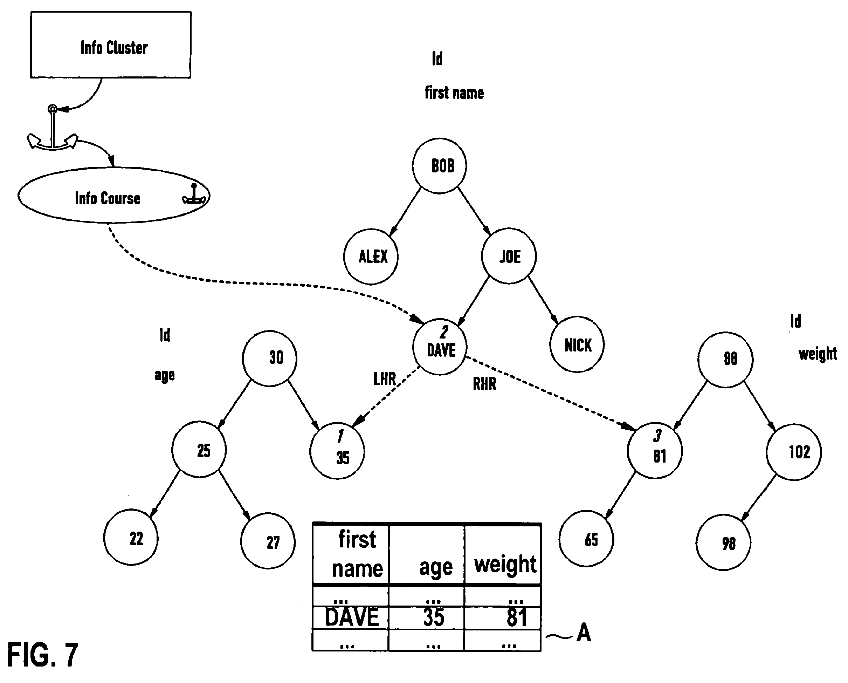

FIG. 7 shows the InfoCourse that contains the data for a row of the table A. Use is made of the LHR and RHR pointers. The end pointers again point back to the anchor of the InfoCourse to maintain the ring structure. Note that the InfoCourse also forms a binary tree, sorted by the ID numbers of the InfoTypes. Note that the ID numbers of the InfoTypes are unique. For example, integer values are used for the ID numbers.

FIG. 8 illustrates all the InfoCourse paths (for example implemented using pointers) for the table A. Note that all InfoCells have been provided in the top section with their respective InfoType Id number, over which the binary tree configuration of the InfoCourse via the LHR/RHR pointers is organized. Elements that belong to an InfoType are connected by solid arrows. Elements that belong to an InfoCourse are connected by dashed arrows.

When five million records with 100 attributes (e.g., 100 columns of a relational database table) are loaded into the data storage system 902, then five million InfoCourse trees (InfoCourses) exist, one for each record. Each InfoCourse includes 100 nodes. Each InfoCourse has a corresponding InfoCourse anchor pointing to the respective InfoCourse. In other words, when loading five million records into the data storage system 902 then also five million InfoCourse anchors exist.

Preferably, the data structure as described in the previous figures is stored in a main memory of the computer system 990.

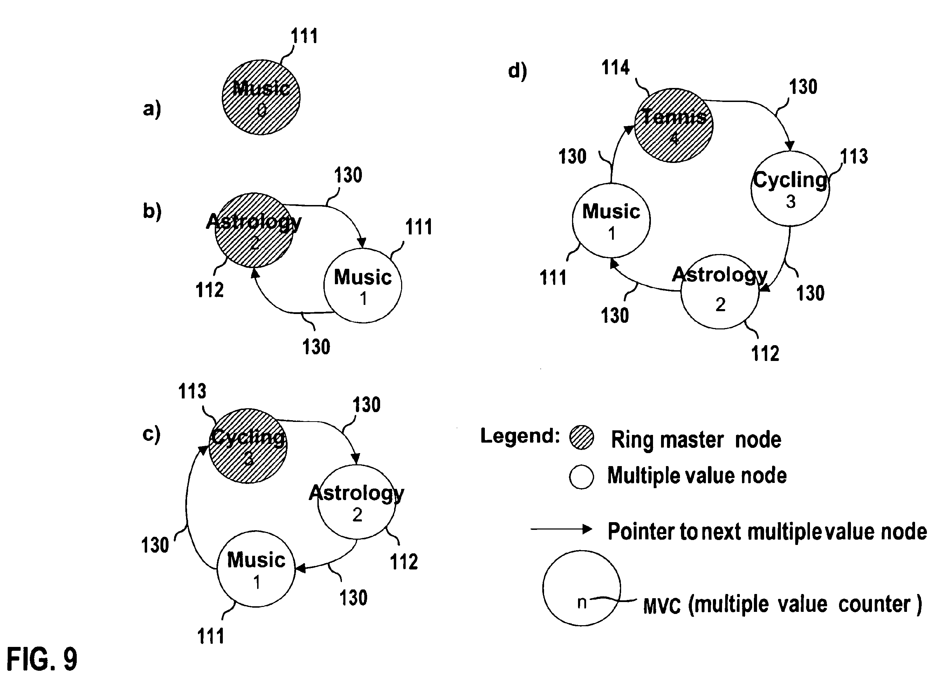

FIG. 9 shows the insertion of multiple values for an InfoType into the data structure with respect to one InfoCourse. In this example, a multiple value structure is implemented as a multiple value ring structure. As described later, in another implementation a multiple value tree structure may be used.

Assume that a person having four hobbies (e.g., music, astrology, cycling, tennis) is to be stored within the data structure. Therefore, four hobby-nodes are to be inserted in the InfoType tree "hobbies". For convenience of explanation, the insertion is shown on the level of only one InfoType tree node hiding other nodes of the InfoType tree.

In a first step a), the value "Music" is inserted as a node 111 into the tree of the InfoType "hobbies". After the insertion, the node 111 "Music" belongs to the InfoCourse of the person. A multiple value node being a member of the corresponding InfoCourse will be referred to as ring master node (illustrated by a hatched fill pattern).

In the next step b) the value "Astrology" is inserted as a further node 112 in InfoType "hobbies" tree. At the same time, this further node 112 is related to the record (InfoCourse) of the person. The hobby-nodes 111, 112 of the person are members of the corresponding "hobbies" tree structure and of an additional circular structure, which will be referred to as multiple value ring structure 130 or simply as ring structure 130. The ring structure 130 is illustrated by pointer arrows pointing from one multiple value node to the next. When inserting the value "Astrology", the existing node 111 "Music" is shifted in the ring structure 130. The further node 112 "Astrology" takes the place of "Music" and becomes the ring master node of the ring structure 130.

A multiple value counter (MVC) counts the number of multiple values for a specific InfoType in a specific InfoCourse. Initially, after step a), the MVC of the node 111 "Music" has the value "0" indicating that there are no multiple values. When the further multiple value node 112 "Astrology" is added, the MVC of the existing node 111 "Music" is set to "1". The MVC of the further node 112 is set to "2". In this example, a MVC increment of 1 is used. Any other increment serving the purpose of counting the number of multiple value nodes of an InfoCourse can be used instead.

Steps c) and d) show how two further hobby-nodes 113, 114 ("Cycling", "Tennis") are inserted accordingly with corresponding MVC values 3 and 4. In this implementation, the multiple value node with the highest MVC value is the ring master node of the ring structure. Any other node of the ring structure may be defined as the ring master node in alternative implementations.

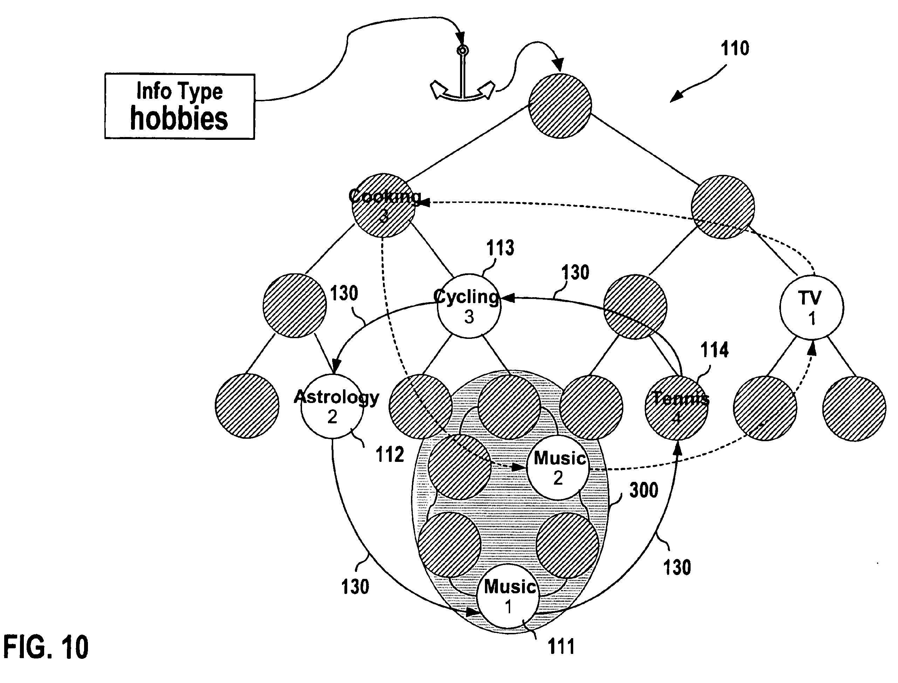

Fig. 10 shows the hobby-nodes in the InfoType "hobbies" tree 110. Multiple value nodes belonging to the InfoCourses of a first and a second person are linked by two corresponding multiple value ring structures. The first ring structure 130 corresponding to the first person is illustrated by solid arrow pointers connecting the hobby-nodes 111 "Music", 112 "Astrology", 113 "Cycling", and 114 "Tennis". The second ring structure corresponding to the second person is illustrated by dashed arrow pointers connecting the hobby-nodes "TV", "Music", and "Cooking". The numbers in the hobby-nodes represent the corresponding MVC values.

Each multiple value node is a member of the InfoType tree 110 - either as a node of the tree or in a ring of identical values as described in the patent application PCT/EP02/01026. For example, there are several persons with the hobby "Music". All nodes with the value "Music" are located in a ring structure illustrated by the grey shaded oval 300. For example, the first and the second person have the hobby "Music". The corresponding multiple value ring structures are superposed to the InfoType tree 110 structure without influencing it.

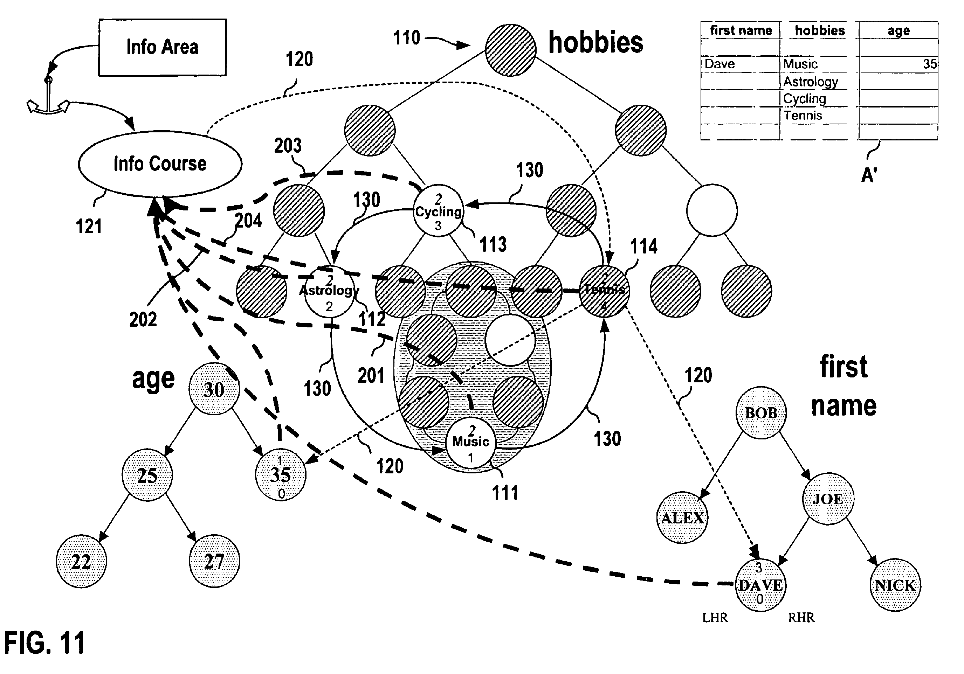

Fig. 11 illustrates an InfoCourse having a multiple value InfoType. The InfoCourse 121 represents a record of a person as specified in table A'. The person has a first name "DAVE" (stored in a "first name" InfoType tree), is "35" years old (stored in a "age" InfoType tree) and has the four hobbies of "Music", "Astrology", "Cycling", and "Tennis" (stored in the "hobbies" InfoType tree 110).

The InfoCourse tree 120 is visualized by the dotted arrows. The corresponding InfoCourse anchor of the InfoCourse tree 120 points to the last inserted hobby-node for the person, which is the ring master node 114 "Tennis" having the highest MVC value ("4").

The other hobby-nodes 111, 112, 113 of the person can be reached indirectly using the corresponding multiple value ring structure 130. Note that in a relational database model they would be part of the relational record as shown, for example, in table A', but the corresponding InfoCourse anchor of the InfoCourse node 121 does not directly point at them.

From each node belonging to an InfoCourse a pointer (bold dashed arrows) points back to the InfoCourse anchor. So when the hobby-node 113 "Cycling" is found in the InfoType tree 110 the anchor of the corresponding InfoCourse node 121 can be located through the corresponding pointer 203. From the InfoCourse anchor any corresponding node in any InfoType Tree can be found by following down the InfoCourse tree structure and looking for a specific attribute ID.

By using the multiple value counter (MVC) in the multiple value nodes, the data system knows immediately whether an InfoCourse has multiple value nodes with regards to a specific InfoType or not. When the MVC of the InfoType node is 0, as for example, for the first name-node "DAVE" and the age-node "35", then there are no multiple values with respect to the corresponding InfoType. When the MVC of the node is greater than 0, then the MVC value of the ring master node 114, which belongs to the InfoCourse tree 120 provides the information about the number of multiple value nodes. For example, this information may be used to generate a distribution of the number of hobbies over all persons or any subset of persons identified by a corresponding query.

The above described multiple value ring structure implementation allows the data storage system to promptly respond to queries posing questions to the data storage system, such as: What is the average number of hobbies per person? How many persons have exactly N, more than N, or less than N hobbies? Who are the persons with the most hobbies?, etc.

In one implementation, the data storage system can allow one to store duplicate values (e.g., two times the same hobby) in a multiple value ring structure, for example, if required by an application.

In another implementation, the data storage system can prevent a user from inserting such duplicate values by running through the corresponding multiple value ring structure and checking if the value to be inserted already exists. In this case, the data storage system can refuse the insertion and, for example, return an error to the application or a corresponding error message to the user.

A decision flag can be included in a programming interface of the data storage system. This decision flag may be set by an application to indicate to the data storage system, whether a check for duplicate values should be performed or not.

Based on the assumption that the number of multiple values included in one multiple value ring structure occurring in an application is below a certain threshold value (e.g., less than 100) the multiple value ring structure implementation shows reasonable performance, even if a check of duplicate values is performed. If, however, for a particular application hundreds or thousands or even more multiple values can occur then it may be advantageous to replace the multiple value ring structure by a multiple value tree structure which is superposed to the InfoType tree. The multiple value tree structure is superposed to the corresponding InfoType tree structure in a similar way as the InfoCourse tree structures are superposed to the InfoType tree structures. Using a multiple value tree structure instead of a multiple value ring structure can considerably accelerate the search for duplicate values for large amounts of multiple value nodes.

Embodiments of the invention can be implemented in digital electronic circuitry, or in computer hardware, firmware, software, or in combinations of them. The invention can be implemented as a computer program product, i.e., a computer program tangibly embodied in an information carrier, e.g., in a machine-readable storage device or in a propagated signal, for execution by, or to control the operation of, data processing apparatus, e.g., a programmable processor, a computer, or multiple computers. A computer program can be written in any form of programming language, including compiled or interpreted languages, and it can be deployed in any form, including as a stand-alone program or as a module, component, subroutine, or other unit suitable for use in a computing environment. A computer program can be deployed to be executed on one computer or on multiple computers at one site or distributed across multiple sites and interconnected by a communication network.

Method steps of the invention can be performed by one or more programmable processors executing a computer program to perform functions of the invention by operating on input data and generating output. Method steps can also be performed by, and apparatus of the invention can be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are at least one processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in special purpose logic circuitry.

To provide for interaction with a user, the invention can be implemented on a computer having a display device, e.g., a cathode ray tube (CRT) or liquid crystal display (LCD) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

The invention can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the invention, or any combination of such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other.

## Claims

1. A computer system (990) for storing data in a memory, the computer system (990) storing a data structure with at least one instance of a first data type, the at least one instance associated with:
- nodes of a second data type representing data attributes, and
- nodes of an InfoCourse (121) being nodes of a third data type, representing data records, and comprising a plurality of nodes of the second data type, wherein the nodes of the second data type are arranged in a first tree structure (110), and wherein a plurality of nodes of the InfoCourse (121) are arranged in a second tree structure (120);
**characterized in that**
a multiple value structure (130) links together the nodes of the second data type (111, 112, 113, 114) that belong to the InfoCourse (121), where one node that is linked by the multiple value structure (130) belongs to the second tree structure (120).

2. Computer system of claim 1, where a multiple value counter of the one node (114) has a value that corresponds to the number of nodes of the second data type linked by the multiple value structure (130).

3. Computer system according to any one of the previous claims, where each node of the second data type (111, 112, 113, 114) linked by the multiple value structure (130) has a pointer (201, 202, 203, 204) to the InfoCourse (121).

4. Computer system according to any one of the previous claims, where the multiple value structure (130) is implemented as a ring structure.

5. Computer system according to any one of the claims 1 to 3, where the multiple value structure is implemented as a tree structure.

6. A computer implemented method for storing data in a computer system (990), the computer implemented method storing a data structure with at least one instance of a first data type, the at least one instance associated with:
- nodes of a second data type representing data attributes, and
- nodes of an InfoCourse (121) being nodes of a third data type, representing data records, and comprising a plurality of nodes of the second data type, wherein the nodes of the second data type are arranged in a first tree structure (110), and wherein a plurality of nodes of the InfoCourse (121) are arranged in a second tree structure (120), the first tree structure having a first node (111) of the second data type that represents a value of an attribute for the InfoCourse (121) of the second tree structure (120), comprising the steps of:
adding a further node (112) of the second data type to the first tree structure (110), where the further node (112) represents a further attribute value of the attribute for the InfoCourse (121); and
creating a multiple value structure (130) that links together the first node (111) and the further node (112), where one node of the multiple value structure (130) belongs to the second tree structure (120).

7. Method of claim 6, wherein the further node (112) replaces the first node (111) in the second tree structure (120).

8. Method according to any one of the claims 6 to 7, where each node (111, 112, 113, 114) linked by the multiple value structure (130) has a pointer (201, 202, 203, 204) to the InfoCourse (121).

9. Method according to any one of the claims 6 to 8, where the adding step uses a decision flag to decide whether a check for duplicate node values is performed.

10. Method according to any one of the claims 7 to 9, where the multiple value structure (130) is implemented as a ring structure.

11. Method according to any one of the claims 7 to 9, where the multiple value structure is implemented as a tree structure.

12. A computer program product for storing data in a computer system comprising a plurality of instructions that when loaded into a memory of the computer system cause at least one processor of the computer system to execute the steps of any of the claims 6 to 11.

## Patentansprüche

1. Computersystem (990) zum Speichern von Daten in einem Speicher, wobei das Computersystem (990) eine Datenstruktur mit mindestens einer Instanz eines ersten Datentyps speichert, wobei die mindestens eine Instanz mit Folgendem assoziiert ist:
- Knoten eines zweiten Datentyps, die Datenattribute repräsentieren, und
- Knoten eines InfoCourse (121), wobei es sich um Knoten eines dritten Datentyps handelt, die Datensätze repräsentieren, und die mehrere Knoten des zweiten Typs umfassen, wobei die Knoten des zweiten Datentyps in einer ersten Baumstruktur (110) angeordnet sind, und wobei mehrere Knoten des InfoCourse (121) in einer zweiten Baumstruktur (120) angeordnet sind;
**dadurch gekennzeichnet, dass**
eine Mehrfachwertstruktur (130) die Knoten des zweiten Datentyps (111, 112, 113, 114), die zu dem InfoCourse (121) gehören, miteinander verknüpft, wobei ein Knoten, der durch die Mehrfachwertstruktur (130) verknüpft wird, zu der zweiten Baumstruktur (120) gehört.

2. Computersystem nach Anspruch 1, wobei ein Mehrfachwertzähler des einen Knoten (114) einen Wert aufweist, der der Anzahl der Knoten des zweiten Datentyps entspricht, die durch die Mehrfachwertstruktur (130) verknüpft werden.

3. Computersystem nach einem der vorhergehenden Ansprüche, wobei jeder Knoten des zweiten Datentyps (111, 112, 113, 114), der durch die Mehrfachwertstruktur (130) verknüpft wird, einen Zeiger (201, 202, 203, 204) auf den InfoCourse (121) aufweist.

4. Computersystem nach einem der vorhergehenden Ansprüche, wobei die Mehrfachwertstruktur (130) als eine Ringstruktur implementiert ist.

5. Computersystem nach einem der Ansprüche 1 bis 3, wobei die Mehrfachwertstruktur als eine Baumstruktur implementiert ist.

6. Computerimplementiertes Verfahren zum Speichern von Daten in einem Computersystem (990), wobei das computerimplementierte Verfahren eine Datenstruktur mit mindestens einer Instanz eines ersten Datentyps speichert, wobei die mindestens eine Instanz mit Folgendem assoziiert ist:
- Knoten eines zweiten Datentyps, die Datenattribute repräsentieren, und
- Knoten eines InfoCourse (121), wobei es sich um Knoten eines dritten Datentyps handelt, die Datensätze repräsentieren, und die mehrere Knoten des zweiten Typs umfassen, wobei die Knoten des zweiten Datentyps in einer ersten Baumstruktur (110) angeordnet sind, und wobei mehrere Knoten des InfoCourse (121) in einer zweiten Baumstruktur (120) angeordnet sind, wobei die erste Baumstruktur einen ersten Knoten (111) des zweiten Datentyps aufweist, der einen Wert eines Attributs für den InfoCourse (121) der zweiten Baumstruktur (120) repräsentiert, mit den folgenden Schritten:
Hinzufügen eines weiteren Knotens (112) des zweiten Datentyps zu der ersten Baumstruktur (110), wobei der weitere Knoten (112) einen weiteren Attributwert des Attributs für den InfoCourse (121) repräsentiert; und
Erzeugen einer Mehrfachwertstruktur (130), die den ersten Knoten (111) und den weiteren Knoten (112) miteinander verknüpft, wobei ein Knoten der Mehrfachwertstruktur (130) zu der zweiten Baumstruktur (120) gehört.

7. Verfahren nach Anspruch 6, wobei der weitere Knoten (112) den ersten Knoten (111) in der zweiten Baumstruktur (120) ersetzt.

8. Verfahren nach einem der Ansprüche 6 bis 7, wobei jeder Knoten (111, 112, 113, 114) der durch die Mehrfachwertstruktur (130) verknüpft wird, einen Zeiger (201, 202, 203, 204) zu dem InfoCourse (121) aufweist.

9. Verfahren nach einem der Ansprüche 6 bis 8, wobei der Schritt des Hinzufügens ein Entscheidungs-Flag verwendet, um zu entscheiden, ob eine Prüfung auf Duplikatknotenwerte durchgeführt wird.

10. Verfahren nach einem der Ansprüche 7 bis 9, wobei die Mehrfachwertstruktur (130) als eine Ringstruktur implementiert wird.

11. Verfahren nach einem der Ansprüche 7 bis 9, wobei die Mehrfachwertstruktur als eine Baumstruktur implementiert wird.

12. Computerprogrammprodukt zum Speichern von Daten in einem Computersystem, das mehrere Anweisungen umfasst, die, wenn sie in einem Speicher des Computersystems geladen werden, bewirken, dass mindestens ein Prozessor des Computersystems die Schritte nach einem der Ansprüche 6 bis 11 ausführt.

## Revendications

1. Système informatique (990) pour le stockage de données dans une mémoire, le système informatique (990) stockant une structure de données avec au moins une instance d'un premier type de données, l'au moins une instance étant associée à :
- des noeuds d'un second type de données représentant des attributs de données, et
- des noeuds d'un InfoCourse (121), qui sont des noeuds d'un troisième type de données, représentant des enregistrements de données, et comprennent une pluralité de noeuds du second type de données, dans lequel les noeuds du second type de données sont agencés dans une première structure arborescente (110), et dans lequel une pluralité de noeuds de l'InfoCourse (121) sont agencés dans une seconde structure arborescente (120) ;
**caractérisé en ce que**
une structure à valeurs multiples (130) lie les uns aux autres les noeuds du second type de données (111, 112, 113, 114) qui appartiennent à l'InfoCourse (121), un noeud qui est lié par la structure valeurs multiples (130) appartenant la seconde structure arborescente (120).

2. Système informatique selon la revendication 1, dans lequel un compteur à valeurs multiples dudit noeud (114) a une valeur qui correspond au nombre de noeuds du second type de données qui sont liés par la structure à valeurs multiples (130).

3. Système informatique selon l'une quelconque des revendications précédentes, dans lequel chaque noeud du second type de données (111, 112, 113, 114) lié par la structure à valeurs multiples (130) possède un pointeur (201, 202, 203, 204) pointant sur l'InfoCourse (121).

4. Système informatique selon l'une quelconque des revendications précédentes, dans lequel la structure à valeurs multiples (130) est mise en oeuvre sous la forme d'une structure en anneau.

5. Système informatique selon l'une quelconque des revendications 1 à 3, dans lequel la structure à valeurs multiples est mise en oeuvre sous la forme d'une structure arborescente.

6. Procédé mis en oeuvre sur ordinateur pour stocker des données dans un système informatique (990), le procédé mis en oeuvre sur ordinateur stockant une structure de données avec au moins une instance d'un premier type de données, l'au moins une instance étant associée à :
- des noeuds d'un second type de données représentant des attributs de données, et
- des noeuds d'un InfoCourse (121), qui sont des noeuds d'un troisième type de données, représentant des enregistrements de données, et comprennent une pluralité de noeuds du second type de données, dans lequel les noeuds du second type de données sont agencés dans une première structure arborescente (110), et dans lequel une pluralité de noeuds de l'InfoCourse (121) sont agencées dans une seconde structure arborescente (120), la première structure ayant un premier noeud (111) du second type de données qui représente une valeur d'un attribut pour l'InfoCourse (121) de la seconde structure arborescente (120), comprenant les étapes consistant à ;
ajouter un noeud supplémentaire (112) du second type de données à la première structure arborescente (110), le noeud supplémentaire (112) représentant une valeur d'attribut supplémentaire de l'attribut destiné à l'InfoCourse (121) ; et
créer une structure à valeurs multiples (130) qui relie l'un à autre le premier noeud (111) et le noeud supplémentaire (112), un noeud de la structure à valeurs multiples (130) appartenant à la seconde structure arborescente (120).

7. Procédé selon la revendication 6, dans lequel le noeud supplémentaire (112) remplace le premier noeud (111) dans la seconde structure arborescente (120).

8. Procédé selon l'une quelconque des revendications 6 à 7, dans lequel chaque noeud (111, 112, 113, 114) lié par la structure à valeurs multiples (130) possède un pointeur (201, 202, 203, 204) pointant sur l'InfoCourse (121).

9. Procédé selon l'une quelconque des revendications 6 à 8, dans lequel l'étape d'ajout utilise un drapeau de décision pour décider si une vérification de la présence de valeurs de noeuds en double est effectuée.

10. Procédé selon l'une quelconque des revendications 7 à 9, dans lequel la structure à valeurs multiples (130) est mise en oeuvre sous la forme d'une structure en anneau.

11. Procédé selon l'une quelconque des revendications 7 à 9, dans lequel la structure à valeurs multiples est mise en oeuvre sous la forme d'une structure arborescente.

12. Produit à base de programme informatique destiné à stocker des données dans un système informatique, comprenant une pluralité d'instructions qui, lorsqu'elles sont chargées dans une mémoire du système informatique, provoquent l'exécution par au moins un processeur du système informatique des étapes de l'une quelconque des revendications 6 à 11.
